# EUROPÄISCHE PATENTSCHRIFT

(11) **EP 0 383 986 B1**
(45) Veröffentlichungstag und Bekanntmachung des Hinweises auf die Patenterteilung: **15.06.1994**
(21) Anmeldenummer: 89103291.4
(22) Anmeldetag: 24.02.1989
(51) Int. Cl.: H04L 12/00

(54) **Verfahren und Anordnung zur Übertragung von Daten zwischen einer zentralen Datenstation und mehreren Datenendeinrichtungen im lokalen Bereich**
Method and arrangement for the transmission of data between a central data station and a plurality of data terminal devices in the local area
Procédé et dispositif de transmission de données entre une station centrale et plusieurs équipements terminaux de données dans un domaine local

(43) Veröffentlichungstag der Anmeldung: 29.08.1990
(73) Patentinhaber: Siemens Nixdorf Informationssysteme Aktiengesellschaft, 33102 Paderborn (DE)
(72) Erfinder: Meissner, Holger, Dr., D-8000 München 60 (DE); Störzbach, Werner, Dr., D-8033 Martinsried (DE)
(74) Vertreter: Fuchs, Franz-Josef, Dr.-Ing.

(56) Entgegenhaltungen:
- DE-A- 3 306 942
- SIEMENS/TELCOM REPORT, Band 10, März 1987, Seiten 211-217, Erlangen, DE; R. GIECK et al.: "Datennetzabschlussgeräte für Wähl- und Festverbindungen mit Basisbandübertragung"
- SIEMENS/TELCOM REPORT, Band 10, März 1987, Seiten 202-206, Erlangen, DE; W. BACHER et al.: "ZD-A3/2, ein vielseitig einsetzbares Zeitmultiplexsystem für Text- und Datenübertragung"

## Beschreibung

Die Erfindung betrifft ein Verfahren und eine Anordnung zur Übertragung von Daten zwischen einer zentralen Datenstation und mehreren Datenendeinrichtungen im lokalen Bereich gemäß den Merkmalen der Oberbegriffe der Ansprüche 1 und 5.

Es ist allgemein bekannt, Datenverbindungen über Netzknoten zu führen, um Übertragungsleitungen und Übertragungseinrichtungen einzusparen. Netzknoten können beispielsweise als Schnittstellenvervielfacher oder Konzentratoren ausgebildet sein. Über diese Netzknoten haben die Anschlußleitungen der einzelnen Datenendeinrichtungen Zugriff zu einer gemeinsamen Verbindungsleitung, die an eine zentrale Datenstation, beispielsweise eine Datenverarbeitungsanlage, angeschlossen ist.

Während es sich bei den Schnittstellenvervielfachern um nicht schaltbare Netzknoten handelt, bei denen die Signale von der einzigen Schnittstelle auf der einen Seite zu mehreren Schnittstellen auf der anderen Seite und die Signale in umgekehrter Richtung von den einzelnen Schnittstellen der anderen Seite zur einzigen Schnittstelle auf der einen Seite geführt werden, handelt es sich bei den Konzentratoren um schaltbare Netzknoten, die gesteuerte Einrichtungen zur Verbindungsherstellung aufweisen und immer nur einen datendurchlässigen Pfad zwischen einer Datenendeinrichtung und der zentralen Datenstation herstellen. In beiden Fällen können auf beiden Seiten des Netzknotens Datenübertragungseinrichtungen unterschiedlicher Art angeschlossen sein, so daß die Form der Übertragung auf den einzelnen Übertragungsabschnitten frei wählbar ist. Bisher bekannte Anordnungen zur Übertragung von Daten zwischen einer zentralen Datenstation und mehreren Datenendeinrichtungen, insbesondere unter Einsatz eines Konzentrators, verwenden auf den verschiedenen Übertragungsabschnitten unterschiedliche Formen der Datenübertragung. Der Konzentrator führt deshalb eine gegenseitige Anpassung an die unterschiedlichen Datenübertragungsformen durch. Das Anpassen bewirkt allerdings eine erhebliche Herabsetzung der Datenübertragungsgeschwindigkeit. Außerdem sind die Konzentratoren in ihrem Aufbau und in ihrer Steuerung sehr aufwendig.

Die Form der Datenübertragung setzt sich aus einer Datenübertragungsprozedur und einem Datenübertragungsverfahren zusammen. Die Datenübertragungsprozedur gibt das Verfahren und die Regeln für die zeitliche Reihenfolge des Datenaustausches zwischen den Kommunikationspartnern an. Das Datenübertragungsverfahren gibt an, wie die verschiedenen Codierzeichen auf den Leitungen physikalisch übertragen werden, d.h., welche Impulsformungen und gegebenenfalls welche Modulation für die Übertragung der Datensignale gewählt wird.

Eine bekannte Datenübertragungsprozedur ist beispielsweise die genormte Datenübertragungsprozedur HDLC (High Level Data Link Control), die z.B. in Elektronik, 1980, Heft 7, Seiten 64 - 69 und Heft 8, Seiten 89 - 93 beschrieben ist. Die HDLC-Datenübertragungsprozedur zeichnet sich durch eine hohe Datenübertragungssicherheit aus und ist in Verbindung mit den oben angesprochenen schaltbaren Netzknoten und mit HDLC-prozedurfähigen Datenstationen ohne Schwierigkeiten einsetzbar.

Bei den Datenübertragungsverfahren ist beispielsweise das Bipolar- bzw. AMI-(Alternate Mark Inversion)Verfahren bekannt, das zu der Gruppe der Basisbandübertragungsverfahren gehört und u.a. im Buch von P. Bocker: Datenübertragung, Band 1, Seiten 124 und 125, 1978, Springer-Verlag, beschrieben ist. Bei diesem Datenübertragungsverfahren wird der binären 0 binär codierter Daten ein Sendeimpuls 0 und der binären 1 alternierend ein Sendeimpuls +A oder -A zugeordnet.

Es ist bekannt, für die Datenübertragung die HDLC-Datenübertragungsprozedur mit dem AMI-Datenübertragungsverfahren zu kombinieren, jedoch nur in dem Zusammenhang, daß entweder die einzelnen Datenendeinrichtungen direkt mit der zentralen Datenstation verbunden sind oder, wenn ein Netzknoten zwischengeschaltet ist, nach dem Netzknoten eine andere Datenübertragungsform angewendet ist. Im ersten Fall werden nur relativ geringe Abstände zwischen der zentralen Datenstation und den Datenendeinrichtungen erreicht, während im zweiten Fall die bereits erwähnten Nachteile bei der Anwendung unterschiedlicher Datenübertragungsformen auf den verschiedenen Übertragungsabschnitten gegeben sind. Will man im ersten Fall größere Entfernungen zulassen, sind Modems notwendig, die einen zusätzlichen Aufwand darstellen. Gleichzeitig erhöht sich im starken Maße der Leitungsbedarf, da jede Anschlußleitung einzeln verlängert wird.

Es ist daher Aufgabe der Erfindung, ein Verfahren und eine Anordnung der eingangs genannten Art so auszubilden, daß im lokalen Bereich eine schnelle und entfernungsunabhängigere Datenübertragung möglich ist.

Diese Aufgabe wird durch die kennzeichnenden Merkmale der Ansprüche 1 und 5 gelöst. Danach wird auf eine aufwendige und zeitraubende Anpassung an unterschiedliche Datenübertragungsformen auf beiden Seiten des Netzknotens verzichtet. Im Netzknoten werden die zu übertragenden Daten regeneriert und können somit noch einmal über eine weite Distanz ohne zusätliche Verwendung von Modems übertragen werden. Durch die Multiplexerfunktion des Netzknotens werden Leitungen zusammengefaßt und damit eingespart. Ein eigener Taktgenerator im Netzknoten macht ferner zu ihm hinführende Taktleitungen unnötig.

Aus der deutschen Patentschrift 33 06 942 ist zwar bereits eine ähnliche Anordnung bekannt, doch verwendet diese als Netzknoten einen Schnittstellenvervielfacher, der, wie eingangs genannt, nach einem anderen Prinzip arbeitet. Außerdem ist der Schnittstellenvervielfacher über mehr als zweiadrige Schnittstellenleitungen an die zentrale Datenstation bzw. an die Datenendeinrichtungen angeschlossen, so daß dieser nicht über symmetrische Doppeladern, z.B. eine Telefonleitung, betreibbar ist.

Vorteilhafte Weiterbildungen der Erfindung sind in den Unteransprüchen angegeben. Eine dieser Weiterbildungen besteht z.B. darin, daß der Netzknoten eine Schaltereinrichtung aufweist, mittels der im Netzknoten verschiedene Betriebszustände eingestellt werden können.

Nachfolgend wird ein Ausführungsbeispiel der Erfindung anhand der Zeichnung näher erläutert.
Es zeigen:
- FIG 1: Ein Übersichtsschaltbild der Anordnung und
- FIG 2: ein Blockschaltbild des bei der Anordnung nach FIG 1 verwendeten Netzknotens.

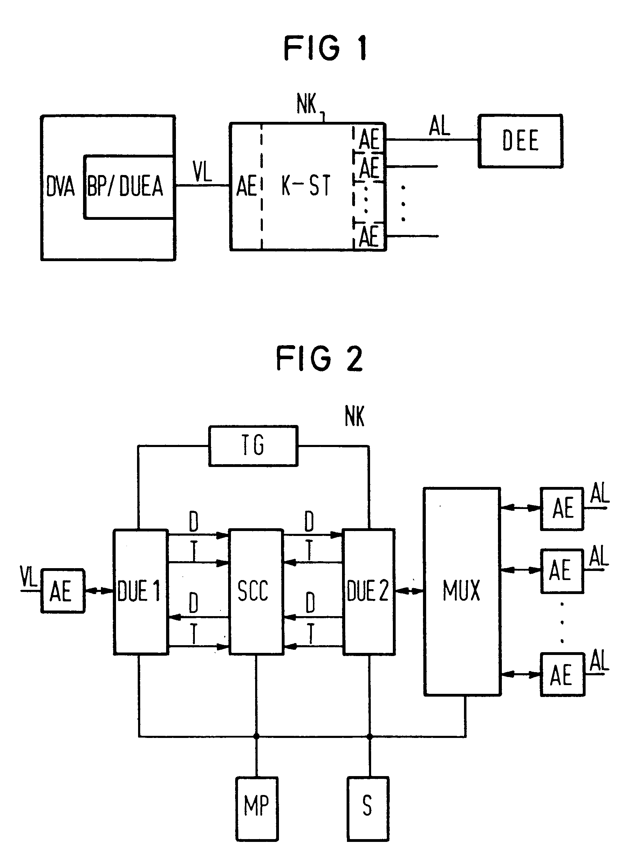

Das Schaltbild gemäß FIG 1 zeigt eine Anordnung zur Übertragung von Daten zwischen einer zentralen Datenstation DVA und mehreren Datenendeinrichtungen DEE im lokalen Bereich unter Verwendung eines als Konzentrator ausgebildeten Netzknotens NK. Die zentrale Datenstation DVA weist einen Blockpuffer BP und einen Datenübertragungsadapter DUEA auf, die über eine Verbindungsleitung VL mit dem Netzknoten NK verbunden sind. Der Blockpuffer BP arbeitet als Ein-/Ausgabeeinrichtung nach der HDLC-Datenübertragungsprozedur in der zentralen Datenstation DVA, wie es beispielsweise aus telecom report 1 (1978), Heft 3, Seiten 164 - 169 bekannt ist. Der Datenübertragungsadapter DUEA setzt die digitalen Ein-/Ausgabesignale des Blockpuffers BP in analoge Übertragungssignale auf der Verbindungsleitung VL um, wobei beim gewählten Datenübertragungsverfahren jedem Zustandswechsel der binär codierten Daten ein im Vorzeichen alternierender Sendeimpuls zugeordnet ist. An den Netzknoten NK sind jeweils über eine Anschlußleitung AL die Datenendeinrichtungen DEE angeschlossen. Der Netzknoten NK weist einen zentralen Steuerteil K-ST und mehrere Anschlußeinheiten AE auf. Die Anschlußeinheiten AE sind die Ein-/Ausgabeeinheiten des Netzknotens NK. Für jede anschließbare Datenendeinrichtung DEE und für die zentrale Datenstation DVA ist eine Anschlußeinheit AE vor gesehen. Die Verbindungsleitung VL ist diesbezüglich mit einer Anschlußeinheit AE auf der einen Seite des Netzknotens NK verbunden, während die Anschlußleitungen AL der einzelnen Datenendeinrichtungen DEE jeweils mit einer Anschlußeinheit AE auf der anderen Seite des Netzknotens NK verbunden sind. Bei der Verbindungsleitung VL sowie bei den Anschlußleitungen AL handelt es sich um symmetrische Doppeladern, z.B. um die Adern einer Telefonleitung.

In FIG 2 ist der innere Aufbau des Netzknotens NK angegeben. Wie bereits erwähnt, sind die Verbindungsleitungen VL sowie die Anschlußleitungen AL jeweils mit einer Anschlußeinheit AE verbunden. Die Anschlußeinheiten AE sind, wie im übrigen alle anderen Komponenten des Netzknotens NK auch, für die HDLC-Datenübertragunsprozedur und das gewählte Datenübertragungsverfahren ausgelegt. Diesbezüglich weisen die für bidirektionale Datenverkehr ausgelegten Anschlußeinheiten AE für ankommende Daten jeweils an sich bekannte Empfängerfilter mit nachgeschaltetem Empfänger bzw. für abgehende Daten an sich bekannte Sendefilter mit vorgeschaltetem Sender auf. Die Sendefilter verhindern die Bildung von Modulationsprodukten und die Empfängerfilter verbessern das Impulsbild der ankommenden Daten und befreien dieses von überlagerten Störungen. Die auf Seiten der zentralen Datenstation DVA angeordnete Anschlußeinheit AE ist mit einer bidirektional arbeitenden ersten Datenübertragungssteuereinheit DUE1 verbunden, die aus den von der Anschlußeinheit AE vorbereiteten Signalen eine Analog-Digital-Umwandlung vornimmt und dabei die ursprünglichen digitalen Signale regeneriert. In umgekehrter Richtung führt sie eine Digital-Analog-Umwandlung bezüglich in Richtung zentrale Datenstation DVA zu sendende Daten durch. Die erste Datenübertragungssteuereinheit DUE1 ist weiter mit einer an sich bekannten seriellen Schnittstellensteuerschaltung SCC verbunden, die den Datenverkehr von bzw. zu den verschiedenen angeschlossenen Einheiten im Netzknoten NK koordiniert. Der seriellen Schnittstellensteuerschaltung SCC folgt dann in Richtung Datenendeinrichtung DEE eine zweite Datenübertragungssteuereinheit DUE2, die in umgekehrter Reihenfolge analog zu der ersten Datenübertragungssteuereinheit DUE1 arbeitet. Das heißt, daß z.B. von der zentralen Datenstation DVA an eine Datenendeinrichtung DEE gesendete Daten zuerst von der ersten Datenübertragungssteuereinheit DUE1 Analog-Digital und anschließend von der zweiten Datenübertragungssteuereinheit DUE2 Digital-Analog gewandelt werden.

Zwischen der zweiten Datenübertragungssteuereinheit DUE2 und den einzelnen Anschlußeinheiten AE für die jeweiligen Datenendeinrichtungen ist ein steuerbarer Auswahlschalter MUX angeordnet, der den jeweiligen Datenweg zu einer betreffenden Datenendeinrichtung DEE freigibt.

Die erste und zweite Datenübertragungssteuereinheit DUE1 und DUE2 werden von einem gemeinsamen Taktgenerator TG angesteuert, der die für die Verarbeitung notwendigen Takte liefert. Beide Datenübertragungssteuereinheiten DUE1 und DUE2 arbeiten mit demselben Grundtakt. Die serielle Schnittstellensteuerschaltung SCC erhält die zum Senden und Empfangen von Daten D jeweils benötigten Taktsignale T jeweils von einer der beiden Datenübertragungssteuereinheiten DUE1 bzw. DUE2.

Gelenkt werden die im Netzknoten NK ablaufenden Steuerungsabläufe von einer Mikroprozessoreinheit MP, die mit den beiden Datenübertragungssteuereinheiten DUE1 und DUE2 sowie mit der seriellen Schnittstellensteuerschaltung SCC und dem steuerbaren Auswahlschalter MUX verbunden ist.

Im Netzknoten NK kann eine Schaltereinrichtung S vorgesehen sein, mittels der verschiedene Betriebszustände im Netzknoten NK eingestellt werden können. Beispielsweise können in Richtung Datenendeinrichtungen verschiedene Datenübertragungsgeschwindigkeiten eingestellt werden oder es kann eingestellt werden, daß die für mehrere Datenendeinrichtungen DEE bestimmten Daten über ein und dieselbe Anschlußeinheit AE ausgegeben werden sollen. An die betreffende Anschlußeinheit AE kann dann ein weiterer Netzknoten in Form eines Konzentrators angeschlossen werden, der die Daten an die zusammengefaßten Datenendeinrichtungen DEE weiterleitet. Durch diese Kaskadierung kann der Leitungsbedarf weiter reduziert und die Entfernung zwischen einer Datenendeinrichtung DEE und der Datenverarbeitungsanlage DVA vergrößert werden. Die Schaltereinrichtung S kann manuell oder über die Mikroprozessor MP einstellbar sein. Letzteres hat den Vorteil, daß die Einstellung der Betriebszustände des Netzknotens NK z.B. von der zentralen Datenstation DVA aus erfolgen kann.

Für die Datenübertragung zwischen der zentralen Datenstation DVA und den Datenendeinrichtungen ergibt sich folgender Ablauf: Sowohl in Richtung Datenendeinrichtungen DEE als auch in Richtung zentrale Datenstation DVA erfolgt die Datenübertragung gemäß der HDLC-Datenübertragungsprozedur und dem gleichen Datenübertragungsverfahren. Das heißt, der Netzknoten NK reicht die von der zentralen Datenstation DVA empfangenen HDLC-Datenpakete transparent an die adressierten Datenendeinrichtungen DEE weiter. Auch alle von den angeschlossenen Datenendeinrichtungen DEE empfangenen HDLC-Datenpakete werden unverändert an die zentrale Datenstation DVA weitergegeben. Beim gewählten Datenübertragungsverfahren werden die binär codierten Daten mit sin²x-förmigen Impulssignalen, die einen geringen Oberwellenanteil aufweisen und deshalb für die Übertragung besonders geeignet sind, übertragen. Aus den jeweils beim Netzknoten NK ankommenden Impulsfolgen werden die ursprünglichen digitalen Daten regeneriert und im internen Speicher der Mikroprozessoreinheit MP zwischengespeichert. Dies ist erforderlich, um Taktunterschiede zwischen den sendenden Teilen der Anordnung und den dem Netzknoten NK zugrundeliegenden Takt ausgleichen zu können. Anhand des gemäß der HDLC-Datenübertragungsprozedur mitgelieferten Kontrollcodes werden die Daten auf eine fehlerfreie Datenübertragung hin überprüft. Außerdem wird die in den Daten enthaltene Adresse einer Datenendeinrichtung DEE ermittelt und der Auswahlschalter MUX entsprechend eingestellt. Unter der Voraussetzung, daß vorher kein Fehler aufgetreten ist, werden die Daten weitergesendet. Dagegen werden beim Erkennen eines Fehlers die Daten nicht weitergesendet, wobei der Fehler von der Datenendeinrichtung DEE bzw. von der Datenverarbeitungsanlage DVA dadurch erkannt wird, daß keine Rückmeldung erfolgt.

## Patentansprüche

1. Verfahren zur Übertragung von binär codierten Daten zwischen einer zentralen Datenstation (DVA) und mehreren Datenendeinrichtungen (DEE) im lokalen Bereich unter Verwendung eines an eine Ein-/Ausgabeeinrichtung (BP, DUEA) der zentralen Datenstation (DVA) angeschlossenen Netzknotens (NK), wobei die Datenübertragung mit einer genormten Datenübertragungsprozedur, bei der die Adresse der jeweils betreffenden Datenendeinrichtung (DEE) in den übertragenen Daten enthalten ist und jede Datenendeinrichtung (DEE) jeweils nur nach Aufruf durch die zentrale Datenstation (DVA) Daten zu dieser sendet, und mit vorgegebenen Datenübertragungsverfahren aus der Gruppe der Basisbandübertragungsverfahren erfolgt,
**dadurch gekennzeichnet,** daß die Datenübertragung vor und nach dem Netzknoten (NK) mit dem gleichen Datenübertragungsverfahren erfolgt, daß die Daten im Netzknoten (NK) regeneriert und zwischengespeichert werden, daß die Daten anhand des mitgelieferten Kontrollcodes überprüft werden und daß abhängig von der in den Daten enthaltenen Zieladresse ein Datendurchschaltepfad eingestellt wird.

2. Verfahren nach Anspruch 1,
**dadurch gekennzeichnet,** daß die Daten mittels eines Datenübertragungsverfahrens übertragen werden, bei dem jedem Zustandswechsel der binär codierten Daten ein im Vorzeichen alternierender Sendeimpuls zugeordnet ist.

3. Verfahren nach Anspruch 1 oder 2,
**dadurch gekennzeichnet,** daß die Daten nur weitergesendet werden, wenn vorher kein Fehler aufgetreten ist.

4. Verfahren nach Anspruch 2 oder 3,
**dadurch gekennzeichnet,** daß die im Vorzeichen alternierenden Sendeimpulse sin²x-förmig verlaufen.

5. Anordnung zur Übertragung von binär codierten Daten zwischen einer zentralen Datenstation (DVA) und mehreren Datenendeinrichtungen (DEE) im lokalen Bereich unter Verwendung eines an eine Ein-/Ausgabeeinrichtung (BP, DUEA) der zentralen Datenstation (DVA) angeschlossenen Netzknotens (NK), wobei die Datenübertragung mit einer genormten Datenübertragungsprozedur, bei der die Adresse der jeweils betreffenden Datenendeinrichtung (DEE) in den übertragenen Daten enthalten ist und jede Datenendeinrichtung (DEE) jeweils nur nach Aufruf durch die zentrale Datenstation (DVA) Daten zu dieser sendet, und mit vorgegebenen Datenübertragungsverfahren aus der Gruppe der Basisbandübertragungsverfahren erfolgt,
**dadurch gekennzeichnet,** daß der Netzknoten (NK) schaltbar und sowohl in Richtung Datenverarbeitungsanlage (DVA) als auch in Richtung Datenendgeräte (DEE) jeweils für das gleiche Datenübertragungsverfahren ausgelegt ist, daß der Netzknoten (NK) für jeweils eine Anschlußleitung (AL) in Senderichtung Modulationsprodukte verhindernde und in Empfangsrichtung impulsformende und störsignalunterdrückende Anschlußeinheiten (AE) aufweist, von denen die für die zentrale Datenstation (DVA) zuständige Anschlußeinheit mit einer an das Datenübertragungsverfahren angepaßten ersten Datenübertragungssteuereinheit (DUE1) und die übrigen Anschlußeinheiten über einen steuerbaren Auswahlschalter (MUX) mit einer dem gleichen Datenübertragungsverfahren angepaßten zweiten Datenübertragungssteuereinheit (DUE2) verbunden sind, die jeweils ihrerseits wiederum an eine gemeinsame serielle Schnittstellensteuerschaltung (SCC) und an einen gemeinsamen Taktgenerator (TG) angeschlossen sind, und daß der Netzknoten (NK) eine Mikroprozessoreinheit (MP) mit integriertem Pufferspeicher aufweist, die mit der ersten und zweiten Datenübertragungssteuereinheit (DUE1 und DUE2) sowie mit der seriellen Schnittstellensteuerschaltung (SCC) und dem steuerbaren Auswahlschalter (MUX) verbunden ist.

6. Anordnung nach Anspruch 5,
**dadurch gekennzeichnet,** daß zur Einstellung verschiedener Betriebszustände des Netzknotens (NK) eine Schaltereinrichtung (S) vorgesehen ist.

7. Anordnung nach Anspruch 6,
**dadurch gekennzeichnet,** daß die Schaltereinrichtung (S) manuell bedienbar ist.

8. Anordnung nach Anspruch 6,
**dadurch gekennzeichnet,** daß die Schaltereinrichtung (S) über die Mikroprozessoreinheit (MP) steuerbar ist.

## Claims

1. Method for transmitting binary coded data between a central data station (DVA) and a plurality of data terminals (DEE) in the local area using a network node (NK) connected to an input/output means (BP, DUEA) of the central data station (DVA), in which the data transmission is performed with a standardized data transmission procedure in which the address of the respective data terminal (DEE) in each case is contained in the data transmitted and each data terminal (DEE) transmits data to the central data station (DVA) only after being called by the latter in each case, and with a predetermined data transmission method from the group of baseband transmission methods, characterized in that the data transmission is performed with the same data transmission method preceding and following the network node (NK), in that the data are regenerated and temporarily stored in the network node (NK), in that the data are checked on the basis of the control code also supplied, and in that a data through-connection path is set depending on the destination address contained in the data.

2. Method according to Claim 1, characterized in that the data are transmitted using a data transmission method in which a transmission pulse whose operational sign alternates is assigned to each state change of the binary coded data.

3. Method according to Claim 1 or 2, characterized in that the data are only forwarded if no error has previously occurred.

4. Method according to Claim 2 or 3, characterized in that the transmission pulses whose operational signs alternate are sin²x-shaped.

5. Arrangement for transmitting binary coded data between a central data station (DVA) and a plurality of data terminals (DEE) in the local area using a network node (NK) connected to an input/output means (BP, DUEA) of the central data station (DVA), in which the data transmission is performed with a standardized data transmission procedure in which the address of the respective data terminal (DEE) in each case is contained in the data transmitted and each data terminal (DEE) transmits data to the central data station (DVA) only after being called by the latter in each case, and with a predetermined data transmission method from the group of baseband transmission methods, characterized in that the network node (NK) is switchable and is designed for the same data transmission method both in the direction toward the data processing system (DVA) and in the direction toward the data terminals (DEE), in that the network node (NK) has connector units (AE) that prevent modulation products in transmitting direction and shape pulses and suppress noise signals in receiving direction for a connecting line (AL) in each case, of which the connector unit responsible for the central data station (DVA) is connected to a first data transmission control unit (DUE1) adapted to the data transmission method and the other connector units are connected via a controllable selection switch (MUX) to a second data transmission control unit (DUE2) adapted to the same data transmission method, which in turn are connected for their part in each case to a common serial interface control circuit (SCC) and to a common clock generator (TG), and in that the network node (NK) has a microprocessor unit (MP) with integrated buffer memory which is connected to the first and second data transmission control unit (DUE1 and DUE2) as well as to the serial interface control circuit (SCC) and the controllable selection switch (MUX).

6. Arrangement according to Claim 5, characterized in that a switch means (S) is provided for setting various operating states of the network node (NK).

7. Arrangement according to Claim 6, characterized in that the switch means (S) can be manually operated.

8. Arrangement according to Claim 6, characterized in that the switch means (S) can be controlled via the microprocessor unit (MP).

## Revendications

1. Procédé pour la transmission de données codées en binaire entre un poste central de transmission de données (DVA) et plusieurs dispositifs terminaux de transmission de données (DEE), dans la zone locale, moyennant l'utilisation d'un noeud (NK) du réseau, qui est raccordé à un dispositif d'entrée/sortie (BP/DUEA) du poste central de transmission de données (DVA), selon lequel la transmission des données s'effectue avec une procédure normalisée de transmission des données, lors de laquelle l'adresse du terminal de transmission de données respectivement considéré est contenue dans les données transmises et chaque terminal de transmission de données (DEE) envoie des données respectivement seulement après appel par le poste central de transmission de données (DVA), et avec un procédé prédéterminé de transmission de données faisant partie du groupe des procédés de transmission de données de base,
caractérisé par le fait que la transmission de données s'effectue en amont ou en aval du noeud (NK) du réseau, avec le même procédé de transmission de données, que les données sont régénérées et mémorisées temporairement dans le noeud (NK) du réseau, que les données sont contrôlées en référence au code de contrôle fourni conjointement et qu'une voie de transmission directe des données est réglée en fonction de l'adresse de destination contenue dans les données.

2. Procédé suivant la revendication 1, caractérisé par le fait que les données sont transmises au moyen d'un procédé de transmission de données, dans lequel une impulsion d'émission de signe alterné est associée à chaque changement d'état des données codées en binaire.

3. Procédé suivant la revendication 1 ou 2, caractérisé par le fait que les données sont réémises uniquement lorsqu'auparavant aucune erreur n'est apparue.

4. Procédé suivant la revendication 2 ou 3, caractérisé par le fait que les impulsions d'émission de signe alterné ont la forme en sin² x.

5. Dispositif pour la transmission de données codées en binaire entre un poste central de transmission de données (DVA) et plusieurs disPositifs terminaux de transmission de données (DEE), dans la zone locale, moyennant l'utilisation d'un noeud (NK) du réseau, qui est raccordé à un dispositif d'entrée/sortie (BP/DUEA) du poste central de transmission de données (DVA), selon lequel la transmission des données s'effectue avec une procédure normalisée de transmission des données, lors de laquelle l'adresse du terminal de transmission de données respectivement considéré est contenue dans les données transmises et chaque terminal de transmission de données (DEE) envoie des données respectivement seulement après appel par le poste central de transmission de données (DVA), et avec un procédé prédéterminé de transmission de données faisant partie du groupe des procédés de transmission de données de base,
caractérisé par le fait que le noeud (NK) du réseau peut être connecté et est conçu respectivement pour le même procédé de transmission de données aussi bien en direction de l'installation de traitement de données (DVA) qu'en direction des terminaux de transmission de données (DEE), que le noeud (NK) du réseau comporte, pour respectivement une ligne de raccordement (AL), des unités de raccordement (AE), qui empêchent la formation de produits de modulation dans le sens de l'émission, forment des impulsions dans le sens de la réception, suppriment des signaux parasites et parmi lesquels l'unité de raccordement, qui est associée au poste central de transmission de données (DVA), est raccordé à une première unité de commande de transmission de données (DUE1), adaptée au procédé de transmission de données, et les autres unités de raccordement sont raccordées, par l'intermédiaire d'un commutateur de sélection commandable (MUX), à une seconde unité de commande de transmission de données (DUE2), adaptée au même procédé de transmission de données, ces unités de commande de transmission de données étant raccordées respectivement, pour leur part, à nouveau à un circuit série commun de commande d'interface (SSC) et à un générateur de cadence commun (TG), et que le noeud (NK) du réseau possède une unité à microprocesseur (MP) comportant une mémoire tampon intégrée et qui est raccordée aux première et seconde unités de commande de transmission de données (DUE1 et DUE2), ainsi qu'au circuit série de commande d'interface (SCC) et au commutateur de sélection commandable (MUX).

6. Dispositif suivant la revendication 5, caractérisé par le fait qu'il est prévu un dispositif à interrupteurs (S) pour le réglage de différents états de fonctionnement du noeud (NK) du réseau.

7. Dispositif suivant la revendication 6, caractérisé par le fait que le dispositif à interrupteurs (S) peut être actionné manuellement.

8. Dispositif suivant la revendication 6, caractérisé par le fait que le dispositif à interrupteurs (S) peut être commandé par l'intermédiaire de l'unité à microprocesseur (MP).
